# EUROPÄISCHE PATENTSCHRIFT

(11) **EP 1 802 948 B1**
(45) Veröffentlichungstag und Bekanntmachung des Hinweises auf die Patenterteilung: **23.05.2012**
(21) Anmeldenummer: 05797235.8
(22) Anmeldetag: 11.10.2005
(51) Int. Cl.: G01K 11/00

(54) **VERFAHREN ZUM ERMITTELN DER TEMPERATUR EINER OBERFLÄCHENBESCHICHTUNG**
METHOD FOR DETERMINING THE TEMPERATURE OF A SURFACE COATING
PROCEDE POUR DETERMINER LA TEMPERATURE D'UN REVETEMENT SUPERFICIEL

(30) Priorität: 19.10.2004 DE 102004050906
(43) Veröffentlichungstag der Anmeldung: 04.07.2007
(73) Patentinhaber: SIEMENS AKTIENGESELLSCHAFT, 80333 München (DE)
(72) Erfinder: BOSSELMANN, Thomas, 91080 Marloffstein (DE); HUBER, Klaus, 91090 Effeltrich (DE); SEVILLA PEREZ, Francisco Javier, 08042 Barcelona (ES); WILLSCH, Michael, 90762 Fürth (DE)
(86) Internationale Anmeldenummer: PCT/EP2005/055141
(87) Internationale Veröffentlichungsnummer: WO 2006/042807

(56) Entgegenhaltungen:
- EP-B- 1 105 550
- US-A1- 2004 166 339

## Beschreibung

Die vorliegende Erfindung betrifft ein Verfahren zum Ermitteln der Temperatur einer Oberflächenbeschichtung von in einer Strömungsmaschine mit an einer in einem Gehäuse drehbar gelagerten Rotorwelle angeordneten Laufschaufeln. Ferner betrifft die Erfindung ein Verfahren zum Ermitteln der Temperatur einer Oberflächenbeschichtung von in einer Strömungsmaschine mit einem Gehäuse drehfest angeordneten Leitschaufeln, sowie eine Vorrichtung zur Durchführung der Verfahren.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie zu überführen, insbesondere eine Drehbewegung. Um den Wirkungsgrad solcher Maschinen zu erhöhen, werden immer höhere physikalische Anforderungen an die verwendeten Materialien der Strömungsmaschine gestellt. So wird zur Erhöhung des Wirkungsgrads einer Gasturbine die Temperatur einer in die Gasturbine einströmenden Gasströmung auf mehr als 1200°C gesteigert. Um den hohen physikalischen Anforderungen, insbesondere aufgrund der Temperatur, standhalten zu können, werden die Schaufeln der Turbine mit einer Beschichtung versehen, die einer besonders hohen Beanspruchung standhält. Eine solche Beschichtung ist beispielsweise das so genannte Thermal Barrier Coating von Schaufeln einer Gasturbine, im folgenden TBC genannt, wobei ein Schaufelblatt an seiner der Gasströmung ausgesetzten Oberfläche mit einer derartigen Beschichtung versehen wird. Als Beschichtung kommt beispielsweise "Yttrium stabilisiertes Zirkoniumoxid" in Frage. Aufgrund der Temperaturabhängigkeit des Wirkungsgrades ist es wünschenswert, die Temperatur der Gasströmung bis zu einem maximalen Grenzwert zu erhöhen, ohne dass das TBC beschädigt wird. Dazu bedarf es Messverfahren und Vorrichtungen zur genauen Temperaturbestimmung der Schaufeloberflächen und insbesondere der Schaufeloberflächenbeschichtungen während des Betriebes der Strömungsmaschine.

Eine gängige Möglichkeit zur Temperaturbestimmung ist die Anbringung von Thermoelementen an die zu untersuchenden Stellen. Aufgrund der hohen Temperaturen im Gasstrom der Strömungsmaschine fallen die Thermoelemente in der Regel nach einigen Stunden Betriebszeit aus und sind in den meisten Fällen zerstört.

Eine Berührungslose alternative zu Thermoelementen stellen optische Pyrometer dar, mit denen aus der vom zu untersuchenden heißen Objekt abgestrahlten Strahlung auf optischem Wege auf die Temperatur des Objektes schließen kann. Ein entsprechendes Pyrometer ist in GB 2 109 472 A angegeben. Da die Abstrahlcharakteristik und damit der Emissionskoeffizient von TBC relativ wenig untersucht und somit nicht genau bekannt ist, kann hiermit nur eine relativ ungenaue Temperaturmessung vorgenommen werden.

Aus der EP 1 105 550 B1 ist ein Verfahren zum Ermitteln der Temperatur eine Oberflächenbeschichtung von Laufschaufeln einer Strömungsmaschine bekannt, bei dem dem TBC ein thermolumineszenter Stoff beigemischt wird, dessen Spektrum von der Temperatur abhängt und über dessen Emission auf die Temperatur der Laufschaufel geschlossen wird.

Es ist daher Aufgabe der vorliegenden Erfindung, ein Verfahren und eine Vorrichtung zur Durchführung des Verfahrens bereitzustellen, mit dem die Temperatur der Oberflächenbeschichtung von Lauf- und/oder Leitschaufeln möglichst einfach, betriebssicher und genau ermittelt werden kann.

Als Lösung der Aufgabe wird mit der Erfindung ein Verfahren zum Ermitteln der Temperatur einer Oberflächenbeschichtung von in einer Strömungsmaschine mit an einer in einem Gehäuse drehbar gelagerten Rotorwelle angeordneten Laufschaufeln gemäß dem Anspruch 1 vorgeschlagen, wobei durch mindestens ein Mittel zum Erzeugen von elektromagnetischen Wellen elektromagnetische Wellen in einem Strömungskanal in einem Bereich der Laufschaufeln ausgesendet werden, die elektromagnetischen Wellen von wenigstens einer Laufschaufel zumindest teilweise reflektiert, die reflektierten Anteile der elektromagnetischen Wellen durch mindestens ein Mittel zum Empfang empfangen und aus einer Intensitätsverteilung der empfangenen elektromagnetischen Wellen die Temperatur der Oberflächenbeschichtung der Laufschaufeln ermittelt wird.

Es wird dabei ausgenutzt, dass der reflektierte Anteil der ausgesandten elektromagnetischen Wellen in seiner spektrale Intensitätsverteilung Informationen über die Temperatur der Oberflächenbeschichtung enthält, die durch Auswertung der reflektierten elektromagnetischen Wellen ermittelt werden können. Als Parameter kommen hierzu insbesondere die Amplitude bzw. Intensität und/oder Frequenz bzw. Wellenlänge in Frage.

Es wird mit der Erfindung weiterhin ein Verfahren zum Ermitteln der Temperatur einer Oberflächenbeschichtung von in einer Strömungsmaschine mit einem Gehäuse drehfest angeordneten Leitschaufeln gemäß den Anspruch 2 vorgeschlagen, wobei durch mindestens ein Mittel zum Erzeugen von elektromagnetischen Wellen elektromagnetische Wellen in einem Strömungskanal in einem Bereich der Leitschaufeln ausgesendet werden, die elektromagnetischen Wellen von wenigstens einer Leitschaufel zumindest teilweise reflektiert, die reflektierten Anteile der elektromagnetischen Wellen durch mindestens ein Mittel zum Empfang empfangen und aus einer Intensitätsverteilung der empfangenen elektromagnetischen Wellen die Temperatur der Oberflächenbeschichtung der Leitschaufeln ermittelt wird.

Darüber hinaus wird eine Kombination beider vorstehender Verfahren vorgeschlagen, um die Temperatur der Oberflächenbeschichtung der Laufschaufeln als auch die Temperatur der Oberflächenbeschichtung der Leitschaufeln zu ermitteln.

Dabei ist es von Vorteil, dass die elektromagnetischen Wellen mit an die Dicke der Oberflächenbeschichtung angepassten Frequenzen ausgesendet werden, wobei die empfangenen elektromagnetischen Wellen eine Intensitätsabnahme bei einer Resonanzfrequenz aufweisen und die Intensitätsverteilung bei der Resonanzfrequenz minimal wird. Dabei sollten die elektromagnetischen Wellen über ein weites Frequenzband mit gleicher Intensität ausgesendet werden, damit das Minimum und die Resonanzfrequenz umso genauer bestimmt werden kann. Die Oberflächenbeschichtung weist nämlich für elektromagnetische Wellen eines engen Frequenzbereiches um eine so genannte Resonanzfrequenz herum eine besonders niedrige Reflektivität auf, so dass die spektrale Intensitätsverteilung der reflektierten elektromagnetischen Wellen einen Einbruch für Frequenzen bei der Resonanzfrequenz aufweist, wobei die Resonanzfrequenz das Minimum darstellt. Dies ist darauf zurückzuführen, dass bei der Resonanzfrequenz die zugeordnete Wellenlänge der ausgesandten elektromagnetischen Welle gerade viermal so groß ist, wie die Dicke der Oberflächenbeschichtung, so dass sich die an der Oberfläche der Beschichtung und die an der Grenzfläche von Beschichtung und dahinter liegendem Metall reflektierten Anteile der ausgesandten elektromagnetischen Welle gegenseitig zumindest teilweise auslöschen.

Vorteilhaft kann somit aus dem Betrag der Intensitätsabnahme die Temperatur der Oberflächenbeschichtung der Schaufeln ermittelt werden. Vorteilhaft kann auch aus dem Betrag der Resonanzfrequenz die Temperatur der Oberflächenbeschichtung der Schaufeln ermittelt werden. Da die Intensitätsabnahme und auch die Resonanzfrequenz temperaturabhängig sind, liefert eine Bestimmung mindestens einer der beiden Größen direkt die gewünschte Temperaturinformation. Sowohl die Änderung der Intensitätsabnahme als auch die Änderung der Resonanzfrequenz ist auf einen Änderung der Dielektrizitätskonstante und/oder auf eine Änderung der Schichtdicke der Oberflächenbeschichtung in Abhängigkeit der Temperatur der Oberflächenbeschichtung zurückzuführen.

Es kann vorgesehen sein, dass das mindestens eine Mittel zum Erzeugen der elektromagnetischen Wellen für den Empfang der reflektierten elektromagnetischen Wellen verwendet wird. Die damit gewonnene Platzersparnis ermöglicht das Anbringen mehrerer kombinierter Sende- und Empfangsmittel an verschiedenen Stellen der Strömungsmaschine. So können beispielsweise über den Umfang der Strömungsmaschine verteilt angeordnete Mittel zum Aussenden und Empfangen der elektromagnetischen Wellen verwendet werden, wobei eine Anordnung bedarfsgerecht vorgesehen sein kann.

Ferner wird vorgeschlagen, dass als elektromagnetische Wellen Millimeterwellen, insbesondere im Frequenzbereich von 10 GHz bis 130 GHz, verwendet werden. Denn elektromagnetische Wellen dieser Frequenz haben eine Wellenlänge in der Größenordnung der Schichtdicke der Oberflächenbeschichtung, so dass eine besonders gute Auslöschung der an der Oberfläche der Beschichtung und der an der Grenzfläche von Beschichtung und dahinter liegendem Metall reflektierten Anteile der ausgesandten elektromagnetischen Welle gewährleistet ist.

Mit der Erfindung wird ferner eine Vorrichtung zur Durchführung des erfindungsgemäßen Verfahrens vorgeschlagen, welche mindestens ein Mittel zum Erzeugen einer elektrischen Schwingung, mindestens ein Mittel zur Erzeugung elektromagnetischer Wellen aus der Schwingung, mindestens ein Mittel zum Empfang elektromagnetischer Wellen und eine Auswerteeinheit zur Auswertung der empfangbaren elektromagnetischen Wellen aufweist.

Vorteilhaft sind das mindestens eine Mittel zur Erzeugung der elektromagnetischen Wellen und das mindestens eine Mittel zum Empfang der reflektierten elektromagnetischen Wellen in einem Strömungskanal der Strömungsmaschine angeordnet. Diese können jeweils durch Antennen gebildet sein, die geeignet sind, elektromagnetische Millimeterwellen zu erzeugen und auszusenden bzw. zu empfangen. Das Mittel zum Erzeugen einer elektrischen Schwingung kann beispielsweise durch einen elektronischen Oszillator gebildet sein, der mit der Antenne zur Erzeugung der elektromagnetischen Wellen in Wirkverbindung steht. Das Mittel zum Empfang elektromagnetischer Wellen steht vorzugsweise mit einer Auswerteeinheit in Wirkverbindung, die in der Lage ist, aus den vom Mittel zum Empfang gelieferten Signalen die Temperatur der Oberflächenbeschichtung der Schaufeln zu ermitteln. Darüber hinaus ist es denkbar, dass das mindestens eine Mittel zur Erzeugung der elektromagnetischen Wellen und das mindestens eine Mittel zum Empfang der reflektierten elektromagnetischen Wellen außerhalb des Strömungskanals der Strömungsmaschine angeordnet sind, und die erzeugten elektromagnetischen Wellen über mindestens einen entsprechend positionierten im Strömungskanal der Strömungsmaschine angeordneten Wellenleiter in den Strömungskanal ausgesendet werden und die an den Schaufeln reflektierten elektromagnetischen Wellen ebenfalls über mindestens einem Wellenleiter an das mindestens eine Mittel zum Empfangen geleitet werden.

Dabei ist es vorteilhaft, dass die elektromagnetischen Wellen mit der mindestens einen Antenne gerichtet und/oder fokussierbar auszusenden sind. Hiermit ist eine gezielte Temperaturmessung gewährleistet. Zudem kann auch eine Ortsauflösung der Temperaturmessung an den Schaufeln ermöglicht werden, wenn darüber hinaus die Antenne derart ausgeführt ist, dass Translationen und/oder Drehungen der Antenne möglich sind.

Weiterhin wird vorgeschlagen, dass das mindestens eine Mittel zur Erzeugung elektromagnetischer Wellen sowohl zum Senden als auch zum Empfang elektromagnetischer Wellen geeignet ist. Die Anzahl der Bauelemente kann auf diese Weise weiter reduziert werden. So kann beispielsweise das mindestens eine Mittel zur Erzeugung elektromagnetischer Wellen über ein Kopplungsmittel mit dem Mittel zum Erzeugen einer Schwingung in Wirkverbindung stehen. Die Signale, die auf die empfangenen elektromagnetischen Wellen zurückzuführen sind, werden über das Kopplungsmittel der Auswerteeinheit zugeführt. Es können auch mehrere Kopplungsmittel und Antennen vorgesehen sein, die beispielsweise parallel mit mehreren zugeordneten Auswerteeinheiten oder auch mit beispielsweise einer Auswerteeinheit im Zeitmultiplex in Verbindung stehen.

Vorteilhaft ist die Strömungsmaschine eine Gasturbine. Gerade im Großmaschinenbereich kann mit der erfindungsgemäßen Vorrichtung eine einfache, betriebssichere und genaue Temperaturbestimmung der Oberflächenbeschichtung der Gasturbinenschaufeln erreicht werden, wodurch ein effektiverer Betrieb gewährleistet werden kann und insbesondere teure Stillstandzeiten wegen Wartung und Reparaturmaßnahmen wegen zerstörter Oberflächenbeschichtungen und Schaufeln weiter reduziert werden können. So kann beispielsweise eine Erhöhung der Verfügbarkeit einer mit einer Gasturbine ausgerüsteten Energieversorgung erreicht werden. Die erfindungsgemäße Vorrichtung kann darüber hinaus derart ausgestaltet sein, dass die Auswirkungen auf die Gasströmung im Strömungskanal der Strömungsmaschine weitgehend gering gehalten werden.

Bevorzugte, jedoch keinesfalls einschränkende Ausführungsbeispiele der Erfindung werden nunmehr anhand der Zeichnung näher erläutert. Zur Verdeutlichung ist die Zeichnung nicht maßstäblich ausgeführt, und gewisse Merkmale sind nur schematisiert dargestellt. Im Einzelnen zeigen
- Figur 1: eine Gasturbine des Stands der Technik in einer teilweise aufgeschnittenen, perspektivischen Ansicht,
- Figur 2: eine vergrößerte Ansicht eines Ausschnitts aus der Zeichnung in Figur 1 mit einer erfindungsgemäßen Vorrichtung,
- Figur 3: ein Prinzipschaltbild zur Ausführung des erfindungsgemäßen Verfahrens,
- Figur 4: eine Laufschaufel der Gasturbine in Figur 1,
- Figur 5: eine Leitschaufel der Gasturbine in Figur 1,
- Figur 6: Spektrale Intensitätsverteilung reflektierter elektromagnetischer Wellen für unterschiedliche Temperaturen der Oberflächenbeschichtung und
- Figur 7: eine Antennen-Anordnung zur Überwachung von Leit- und/oder Laufschaufeln.

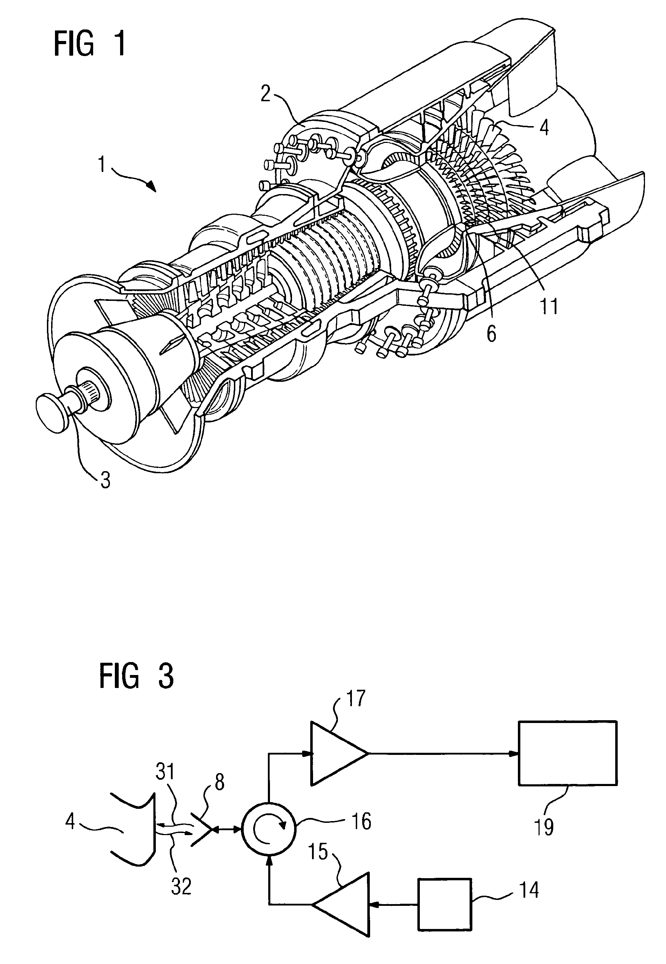

Einander entsprechende Teile sind in den Figuren 1 bis 7 mit denselben Bezugszeichen versehen.

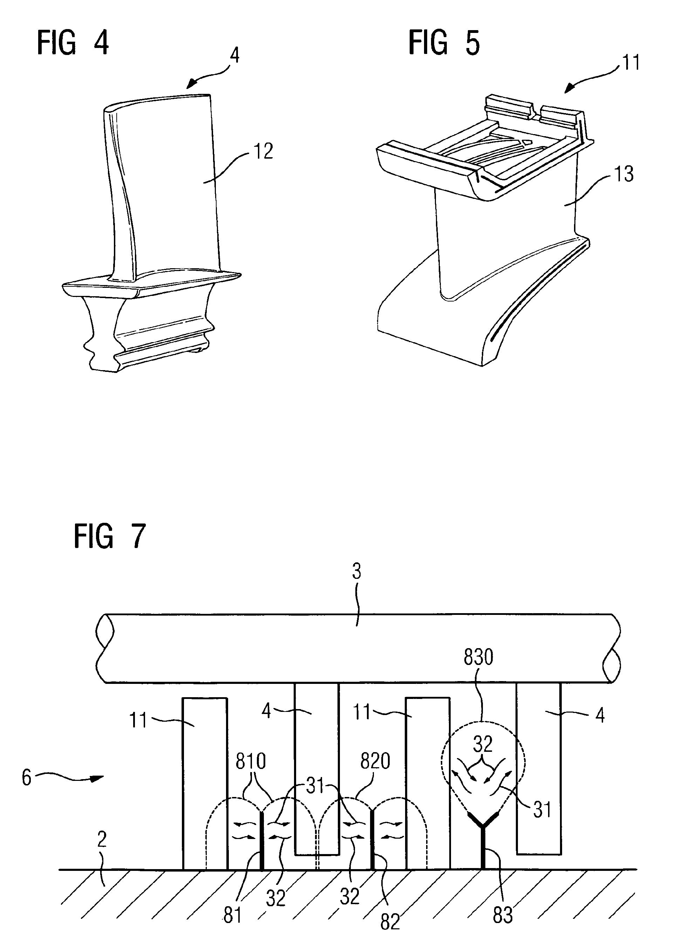

In Figur 1 ist eine Gasturbine 1 des Standes der Technik dargestellt, die für eine hohe Gaseintrittstemperatur von ca. 1200°C konzipiert ist. Die Gasturbine 1 weist an einer in einem Gehäuse 2 drehbar gelagerten Rotorwelle 3 angeordnete Laufschaufeln 4 auf. Ferner sind mit dem Gehäuse 2 drehfest verbundene Leitschaufeln 11 vorgesehen (Figur 4, Figur 5). Die Laufschaufeln 4 und die Leitschaufeln 11 sind insbesondere jeweils mit einer Oberflächenbeschichtung 12, 13 versehen, um den physikalischen Beanspruchungen im Strömungskanal 6 der Gasturbine 1 Stand zu halten. Bei der Beschichtung handelt es sich beispielsweise um "Yttrium stabilisiertes Zirkoniumoxid".

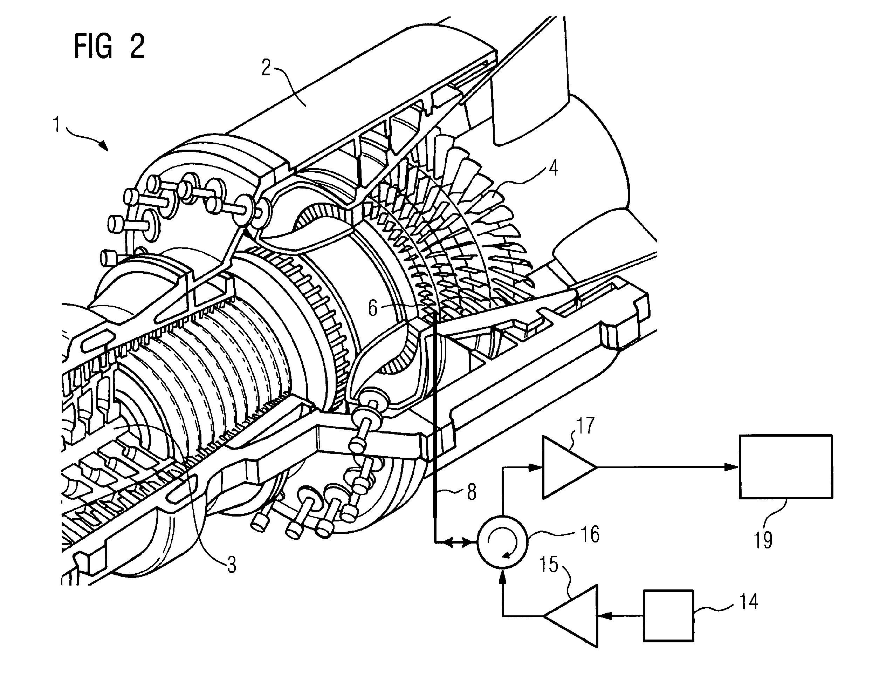

Wie in Figur 2 dargestellt, ist die Turbine 1 mit einer erfindungsgemäßen Vorrichtung ausgestattet, welche eine Antenne 8, insbesondere eine für Millimeterwellen ausgeführte Antenne, aufweist, die in den Strömungskanal 6 der Gasturbine 1 hineinragt. Die Antenne 8, die insbesondere für elektromagnetische Wellen mit Frequenzen von 10 GHz bis 130 GHz vorgesehen ist, ist im Bereich der zu untersuchenden Laufschaufeln 4 insbesondere zwischen zwei Laufschaufelreihen angeordnet. Die Antenne 8 dient als Mittel zum Aussenden von elektromagnetischen Wellen und kann auch als Mittel zum Empfang von elektromagnetischen Wellen eingesetzt werden. Die Antenne 8 steht in Kommunikationsverbindung mit einem Zirkulator 16. Die erfindungsgemäße Vorrichtung weist ferner einen Hochfrequenzgenerator 14 auf, der über einen Verstärker 15 mit dem Zirkulator 16 in Wirkverbindung steht. Der Zirkulator 16 steht mit einem Empfangsverstärker 17 in Verbindung, der mit der Auswerteeinheit 19 gekoppelt ist (Figur 2).

Im Einzelnen läuft das Verfahren zum Ermitteln der Temperatur einer Oberflächenbeschichtung 12, 13 von Lauf- und Leitschaufeln 4 und 11 des Ausführungsbeispiels gemäß Figur 3 folgendermaßen ab:
Der elektronische Hochfrequenzgenerator 14 erzeugt eine Hochfrequenz mit einer festen, vorgebbaren Frequenz, die vorzugsweise im Bereich zwischen 10 GHz und 130 GHz liegt. Die Hochfrequenz wird dem Verstärker 15 zugeführt, der seinerseits die verstärkte Hochfrequenz über den Zirkulator 16 der Antenne 8 zuführt. Die Antenne 8 erzeugt aus der zugeführten Hochfrequenzenergie mindestens eine entsprechende elektromagnetische Welle 31 und sendet diese gemäß ihrer Strahlungscharakteristik, vorzugsweise gerichtet und insbesondere fokussiert, aus. Die entsprechenden Schaufel 4 (bzw. 11) reflektiert einen Anteil 32 der ausgesandten elektromagnetischen Wellen 31 zurück zur Antenne 8. Die reflektierten elektromagnetischen Wellen 32 werden über die Antenne 8 wieder in ein elektrisches Signal transformiert, welches dem Zirkulator 16 zugeführt wird. Der Zirkulator 16 trennt nun das empfangene Signal vom gesendeten Signal und führt dies dem Empfangsverstärker 17 zu. Vom Empfangsverstärker 17 gelangt das Signal zur Auswerteeinheit 19, die in einem ersten Auswertungsschritt die Intensität der reflektierten elektromagnetischen Welle 32 erfasst und der entsprechenden Frequenz zuordnet.

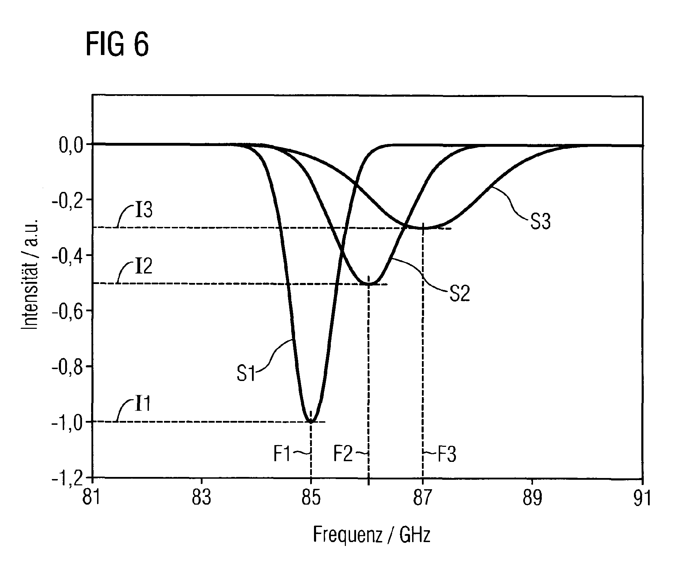

Diese Verfahrensschritte werden mit unterschiedlichen Frequenzen so oft wiederholt, bis von der Auswerteeinheit eine spektrale Intensitätsverteilung ermittelt werden kann. In Figur 6 sind drei derartige spektrale Intensitätsverteilungen S1, S2 und S3 angegeben, die bei Temperaturen von 800°C (S1), 600°C (S2) und 400°C (S3) der Oberflächenbeschichtung 12, 13 aufgenommen wurden. Die Ordinate gibt die Intensität der reflektierten elektromagnetischen Welle 32 an, während auf der Abszisse die Frequenz aufgetragen ist. Alle drei Intensitätsverteilungen S1, S2 und S3 weisen unterschiedlich ausgeprägte Intensitätsminima I1, I2 und I3 auf, wobei sich die den Intensitätsminima I1, I2 und I3 zugeordnete Frequenzen F1, F2 und F2, die so genannte Resonanzfrequenzen, ebenfalls unterscheiden. Je höher die Temperatur ist, desto größer ist die Intensitätsabnahme im Minimum und desto kleiner ist die Resonanzfrequenz. Die Auswertung einer durchgeführten Messreihe hat dabei beispielsweise einen Temperaturkoeffizienten der Resonanzfrequenz von 350 kHz/K und einen Temperaturkoeffizienten der Intensitätsabnahme im Minimum von 0,03dB/K ergeben. Für jedes zu untersuchende Objekt lässt sich entsprechend eine charakteristische Temperaturabhängigkeit der Resonanzfrequenz und der Intensitätsänderung im Minimum bestimmen.

In der Auswerteeinheit 19 werden in einem nächsten Auswertungsschritt die Resonanzfrequenz F1, F2 und F2 und/oder die Intensität des Minimums I1, I2 und I3 ermittelt und mit den entsprechenden zuvor bestimmten Eichkurven für die Temperaturabhängigkeit der Resonanz und/oder des Intensitätsminimums verglichen. Daraus lässt sich dann die Temperatur der Oberflächenbeschichtung 12, 13 der untersuchten Lauf- und/oder Leitschaufeln 4 und/oder 11 ermitteln.

Die ermittelte Temperatur wird über nicht näher dargestellte Anzeigeeinheiten bzw. Meldeeinheiten an eine überwachende Stelle gemeldet bzw. an eine Zentrale weitergeleitet. Die Auswerteeinheit kann auch mit einer Vergleichsfunktion ausgestattet sein, mit der das Erreichen eines vorgebbaren Temperaturschwellwertes feststellbar ist. So kann beispielsweise bei Erreichen des Schwellwertes eine Meldung automatisch ausgegeben werden, dass eine Temperaturregulierung in der Turbine 1 durchzuführen ist.

Optional kann zischen Empfangsverstärker 17 und Auswerteeinheit 19 ein Mischer angeschlossen sein, der zudem mit dem Hochfrequenzgenerator 14 verbunden ist, so dass mit dem in den Figuren 2 und 3 gezeigten Ausführungsbeispiel insbesondere das Prinzip eines Dopplerradars verwendet werden kann. Besonders für die Untersuchung bewegter Objekte, wie beispielsweise die Untersuchung der Laufschaufeln 4 der Gasturbine 1, erweist sich dieses Prinzip als vorteilhaft. Hierbei wird mindestens eine elektromagnetische Welle 31 mit einer festen Wellenlänge ausgesendet, die von einem relativ zur Antenne 8 bewegten, zu überwachenden Objekt (= Laufschaufel 4) reflektiert wird. Durch die Relativbewegung ist die Empfangswellenlänge im reflektierten Teil 32 der mindestens einen elektromagnetischen Welle gegenüber der ausgesendeten Wellenlänge gemäß den bekannten physikalischen Effekten verschoben und die Antenne 8 erzeugt ein entsprechendes Signal das über den Mischer an die Auswerteeinheit 19 gegeben wird, die aus den Eigenschaften dieses Signals (= Frequenz und/oder spektrale Intensitätsverteilung) die Temperatur der Oberflächenbeschichtung 12 der entsprechenden Laufschaufeln 4 ermittelt.

Der Effekt, der zu der Verringerung der Reflektivität der Oberflächenbeschichtung 12, 13 bei der Resonanzfrequenz F1, F2, F2 führt, ist vornehmlich darauf zurückzuführen, dass bei der Resonanzfrequenz F1, F2, F2, also im Minimum der Reflektivität, die Schichtdicke der Oberflächenbeschichtung 12, 13 gerade 1/4 der zugeordneten Wellenlänge reflektierenden elektromagnetischen Welle 31, 32 entspricht. In diesem Fall löschen sich die an der Oberfläche der Oberflächenbeschichtung 12, 13 und die an der Grenzfläche von Oberflächenbeschichtung 12, 13 und dahinter liegendem Metall reflektierten Anteile der ausgesandten elektromagnetischen Welle 31 gegenseitig zumindest teilweise aus. Aufgrund des Zusammenhanges zwischen Schichtdicke der Oberflächenbeschichtung 12, 13 und Wellenlänge sind weitere Minima für Frequenzen zu erwarten, bei denen die Oberflächenbeschichtungsdicke einem Produkt aus Wellenlänge und (1/4+n/2) entspricht, wobei n eine natürliche Zahl ist. Prinzipiell könnten auch diese Minima für das erfindungsgemäße Verfahren herangezogen werden. Sowohl die temperaturabhängige Intensitätsänderung des Minimums als auch die temperaturabhängige Änderung der Resonanzfrequenz lässt sich durch eine Änderung der Dielektrizitätskonstante und/oder eine Änderung der Schichtdicke der Oberflächenbeschichtung 12, 13 in Abhängigkeit der Temperatur der Oberflächenbeschichtung 12, 13 erklären.

In Figur 7 sind beispielhafte Ausführungsformen und Anordnungen verschiedener Antennen 81, 82 und 83 mit jeweils zugehöriger Strahlungscharakteristik 810, 820 bzw. 830 dargestellt. Die Antennen 81, 82 und 83 sind im Strömungskanal 6 im Bereich der zu untersuchenden Laufschaufeln 4 und/oder Leitschaufeln 11 zwischen den Schaufelreihen angeordnet. Geeignet ist eine Ausführung als Stab-Antenne oder als Koaxial-Antenne insbesondere als koaxial ausgeführte Dipolantenne. Andere Antennen-Formen, wie beispielsweise Hornantennen, sind jedoch ebenfalls denkbar. Die Strahlungscharakteristik kann symmetrisch, wie bei den Antennen 81 und 83, aber asymmetrisch, wie bei der Antenne 82, ausgebildet sein. Neben Antennen mit breiter Abstrahlcharakteristik können auch Antennen verwendet werden, die die elektromagnetischen Wellen gerichtet und darüber hinaus auch fokussierend abstrahlen können. Hierzu kommen insbesondere die genannten Hornantennen in Frage.

Die vorliegende Erfindung ist nicht auf das Ausführungsbeispiel beschränkt anzusehen. Ebenso in den Schutzbereich hineingehörend ist, dass auch mehrere Antennen zum Aussenden und/oder für den Empfang vorgesehen sind, um beispielsweise eine Redundanz der Messung oder auch eine höhere Genauigkeit zu erreichen.

Darüber hinaus sieht die vorliegende Erfindung eine gleichzeitige Temperaturmessung der Oberflächenbeschichtung 12, 13 genannter Schaufeln 4 und 11 vor.

## Patentansprüche

1. Verfahren zum Ermitteln der Temperatur einer Oberflächenbeschichtung (12) von in einer Strömungsmaschine (1) mit an einer in einem Gehäuse (2) drehbar gelagerten Rotorwelle (3) angeordneten Laufschaufeln (4), wobei durch mindestens ein Mittel (8) zum Erzeugen von elektromagnetischen Wellen elektromagnetische Wellen (31) in einem Strömungskanal (6) in einem Bereich der Laufschaufeln (4) ausgesendet werden, die elektromagnetischen Wellen (31) von wenigstens einer Laufschaufel (4) zumindest teilweise reflektiert, die reflektierten Anteile (32) der elektromagnetischen Wellen durch mindestens ein Mittel zum Empfang (8) empfangen und aus einer spektralen Intensitätsverteilung der empfangenen elektromagnetischen Wellen (32) die Temperatur der Oberflächenbeschichtung (12) der Laufschaufeln (4) ermittelt wird, **dadurch gekennzeichnet, dass** die elektromagnetischen Wellen (31) mit an die Dicke der Oberflächenbeschichtung (12, 13) angepassten Frequenzen ausgesendet werden und deren an der Oberfläche der Oberflächenbeschichtung (12, 13) und an der Grenzfläche von Oberflächenbeschichtung (12, 13) und dahinter liegendem Metall der Laufschaufeln (4) zumindest teilweise reflektierten Anteile (32) sich zumindest teilweise gegenseitig auslöschen.

2. Verfahren zum Ermitteln der Temperatur einer Oberflächenbeschichtung (13) von in einer Strömungsmaschine (1) mit einem Gehäuse (2) drehfest angeordneten Leitschaufeln (11), wobei durch mindestens ein Mittel (8) zum Erzeugen von elektromagnetischen Wellen (31) elektromagnetische Wellen in einem Strömungskanal (6) in einem Bereich der Leitschaufeln (11) ausgesendet werden, die elektromagnetischen Wellen (31) von wenigstens einer Leitschaufel (11) zumindest teilweise reflektiert, die reflektierten Anteile (32) der elektromagnetischen Wellen durch mindestens ein Mittel zum Empfang (8) empfangen und aus einer spektralen Intensitätsverteilung der empfangenen elektromagnetischen Wellen (32) die Temperatur der Oberflächenbeschichtung (13) der Leitschaufeln (11) ermittelt wird, **dadurch gekennzeichnet, dass** die elektromagnetischen Wellen (31) mit an die Dicke der Oberflächenbeschichtung (12, 13) angepassten Frequenzen ausgesendet werden und deren an der Oberfläche der Oberflächenbeschichtung (12, 13) und an der Grenzfläche von Oberflächenbeschichtung (12, 13) und dahinter liegendem Metall der Leitschaufeln (11) zumindest teilweise reflektierten Anteile (32) sich zumindest teilweise gegenseitig auslöschen.

3. Verfahren nach Anspruch 1 und 2, **dadurch gekennzeichnet, dass** sowohl die Temperatur der Oberflächenbeschichtung (12) der Laufschaufeln (4) als auch die Temperatur der Oberflächenbeschichtung (13) der Leitschaufeln (11) ermittelt wird.

4. Verfahren nach einem der vorangehenden Ansprüche, **dadurch gekennzeichnet, dass** die empfangenen elektromagnetischen Wellen (32) eine Intensitätsabnahme bei einer Resonanzfrequenz (F1, F2, F3) aufweisen und die Intensitätsverteilung (S1, S2, S3) bei der Resonanzfrequenz (F1, F2, F3) minimal wird.

5. Verfahren nach Anspruch 4, **dadurch gekennzeichnet, dass** aus dem Wert der Intensitätsabnahme die Temperatur der Oberflächenbeschichtung (12, 13) der Schaufeln (4, 11) ermittelt wird.

6. Verfahren nach Anspruch 4 oder 5, **dadurch gekennzeichnet, dass** aus dem Wert der Resonanzfrequenz (F1, F2, F3) die Temperatur der Oberflächenbeschichtung (12, 13) der Schaufeln (4, 11) ermittelt wird.

7. Verfahren nach einem der vorangehenden Ansprüche, **dadurch gekennzeichnet, dass** das mindestens eine Mittel (8) zum Erzeugen der elektromagnetischen Wellen (31) für den Empfang der reflektierten elektromagnetischen Wellen (32) verwendet wird.

8. Verfahren nach einem der vorangehenden Ansprüche, **dadurch gekennzeichnet, dass** als elektromagnetische Wellen (31) Millimeterwellen, insbesondere im Frequenzbereich von 10 GHz bis 130 GHz, verwendet werden.

9. Vorrichtung zur Durchführung des Verfahrens nach einem der vorhergehenden Ansprüche mit mindestens einem Mittel (14) zum Erzeugen einer elektrischen Schwingung, mindestens einem Mittel (8) zur Erzeugung elektromagnetischer Wellen (31) mit an die Dicke der Oberflächenbeschichtung (12, 13) angepassten Frequenzen aus der Schwingung, mindestens einem Mittel (8) zum Empfang sich zumindest teilweise gegenseitig auslöschender elektromagnetischer Wellen (32) und mit einer Auswerteeinheit (19) zur Auswertung der empfangbaren elektromagnetischen Wellen (32).

10. Vorrichtung nach Anspruch 9, **dadurch gekennzeichnet, dass** das mindestens eine Mittel (8) zur Erzeugung elektromagnetischer Wellen (31) mindestens eine für Millimeterwellen vorgesehene Antenne ist.

11. Vorrichtung nach Anspruch 10, **dadurch gekennzeichnet, dass** die elektromagnetischen Wellen (31) mit der mindestens einen Antenne (8) gerichtet auszusenden sind.

12. Vorrichtung nach Anspruch 10 oder 11, **dadurch gekennzeichnet, dass** die elektromagnetischen Wellen (31) mit der mindestens einen Antenne (8) fokussierbar auszusenden sind.

13. Vorrichtung nach einem der Ansprüche 9 bis 12, **dadurch gekennzeichnet, dass** das mindestens eine Mittel (8) zur Erzeugung elektromagnetischer Wellen (31) sowohl zum Senden als auch zum Empfang elektromagnetischer Wellen (31, 32) geeignet ist.

14. Vorrichtung nach einem der Ansprüche 9 bis 13, **dadurch gekennzeichnet, dass** das mindestens eine Mittel (8) zur Erzeugung der elektromagnetischen Wellen (31) im Strömungskanal (6) der Strömungsmaschine (1) angeordnet ist.

15. Vorrichtung nach einem der Ansprüche 9 bis 14, **gekennzeichnet durch** eine Gasturbine als Strömungsmaschine (1).

## Claims

1. Method for determining the temperature of a surface coating (12) of rotating blades (4) arranged in a non-positive-displacement machine (1) on a rotor shaft (3) rotationally mounted in a housing (2), wherein electromagnetic waves (31) are emitted in a duct (6) in an area of the rotating blades (4) by at least one means (8) for generating electromagnetic waves, the electromagnetic waves (31) are reflected at least in part by at least one rotating blade (4), the reflected portions (32) of the electromagnetic waves are received by at least one receiving means (8), and the temperature of the surface coating (12) of the rotating blades (4) is determined from a spectral distribution of intensity of the received electromagnetic waves (32), **characterized in that** the electromagnetic waves (31) are emitted with frequencies adapted to the thickness of the surface coating (12, 13), and **in that** their at least partially reflected portions (32) cancel one another at least in part on the surface of the surface coating (12, 13) and on the bounding surface of the surface coating (12, 13) and metal of the rotating blades (4) disposed therebehind.

2. A method for determining the temperature of a surface coating (13) of guide vanes (11) arranged in a rotationally fixed manner in a non-positive-displacement machine (1) with a housing (2), wherein electromagnetic waves (31) are emitted in a duct (6) in an area of the guide vanes (11) by at least one means (8) for generating electromagnetic waves, the electromagnetic waves (31) are reflected at least in part by at least one guide vane (11), the reflected portions (32) of the electromagnetic waves are received by at least one receiving means (8) and the temperature of the surface coating (13) of the guide vanes (11) is determined from a spectral distribution of intensity of the received electromagnetic waves (32), **characterized in that** the electromagnetic waves (31) are emitted with frequencies adapted to the thickness of the surface coating (12, 13), and **in that** their at least partially reflected portions (32) cancel one another at least in part on the surface of the surface coating (12, 13) and on the bounding surface of the surface coating (12, 13) and metal of the guide vanes (11) disposed therebehind.

3. Method according to claim 1 and 2, **characterized in that** both the temperature of the surface coating (12) of the rotating blades (4) and the temperature of the surface coating (13) of the guide vanes (11) are determined.

4. Method according to any one of the preceding claims, **characterized in that** the received electromagnetic waves (32) exhibit a decrease in intensity at a resonance frequency (F1, F2, F3), and the intensity distribution (S1, S2, S3) is minimal at the resonance frequency (F1, F2, F3).

5. Method according to claim 4, **characterized in that** the temperature of the surface coating (12, 13) of the blades/vanes (4, 11) is determined from the value of the decrease in intensity.

6. Method according to claim 4 or 5, **characterized in that** the temperature of the surface coating (12, 13) of the blades/vanes (4, 11) is determined from the value of the resonance frequency (F1, F2, F3).

7. Method according to any one of the preceding claims, **characterized in that** the at least one means (8) for generating the electromagnetic waves (31) is used for receiving the reflected electromagnetic waves (32).

8. Method according to any one of the preceding claims, **characterized in that** millimeter waves, in particular in the frequency range from 10 GHz to 130 GHz, are used as electromagnetic waves (31).

9. Device for implementing the method according to any one of the preceding claims comprising at least one means (14) for generating an electric oscillation, at least one means (8) for generating from the oscillation electromagnetic waves (31) with frequencies adapted to the thickness of the surface coating (12, 13), at least one means (8) for receiving electromagnetic waves (32) which cancel one another at least in part and comprising an evaluation unit (19) for evaluating the receivable electromagnetic waves (32).

10. Device according to claim 9, **characterized in that** the at least one means (8) for generating electromagnetic waves (31) is at least one antenna provided for millimeter waves.

11. Device according to claim 10, **characterized in that** the electromagnetic waves (31) are to be emitted by means of the at least one antenna (8) in a directed manner.

12. Device according to claim 10 or 11, **characterized in that** the electromagnetic waves (31) are to be emitted by means of the at least one antenna (8) in a focusable manner.

13. Device according to any one of claims 9 to 12, **characterized in that** the at least one means (8) for generating electromagnetic waves (31) is suitable both for transmitting and for receiving electromagnetic waves (31, 32).

14. Device according to any one of claims 9 to 13, **characterized in that** the at least one means (8) for generating the electromagnetic waves (31) is arranged in the duct (6) of the non-positive-displacement machine (1).

15. Device according to any one of claims 9 to 14, **characterized by** a gas turbine as a non-positive-displacement machine (1).

## Revendications

1. Procédé de détermination de la température d'un revêtement ( 12 ) en surface d'aubes ( 4 ) mobiles montées dans une turbomachine ( 1 ) ayant un arbre ( 3 ) de rotor monté tournant dans un carter, dans lequel on envoie, par au moins un moyen ( 8 ) de production d'ondes électromagnétiques, des ondes ( 31 ) électromagnétiques dans un canal ( 6 ) d'écoulement d'une zone des aubes ( 4 ) mobiles, les ondes ( 31 ) électromagnétiques sont réfléchies au moins en partie par au moins une aube ( 4 ) mobile, les composantes ( 32 ) des ondes électromagnétiques sont reçues par au moins un moyen de réception ( 8 ) et on détermine, à partir d'une répartition spectrale des intensités des ondes ( 32 ) électromagnétiques reçues, la température du revêtement ( 12 ) en surface des aubes ( 4 ) mobiles, **caractérisé en ce que** l'on envoie des ondes ( 31 ) électromagnétiques à des fréquences adaptées à l'épaisseur du revêtement ( 12, 13 ) en surface et leurs composantes réfléchies au moins en partie sur la surface limite du revêtement ( 12, 13 ) en surface et sur la surface limite du revêtement ( 12, 13 ) en surface et du métal des aubes ( 4 ) mobiles se trouvant derrière s'éteignent mutuellement au moins en partie.

2. Procédé de détermination de la température d'un revêtement ( 13 ) en surface d'aubes ( 11 ) directrices montées fixes en rotation dans une turbomachine ( 1 ) ayant un carter ( 2 ), dans lequel on envoie, par au moins un moyen ( 8 ) de production d'ondes électromagnétiques, des ondes ( 31 ) électromagnétiques dans un canal ( 6 ) d'écoulement d'une zone des aubes ( 11 ) directrices, les ondes ( 31 ) électromagnétiques sont réfléchies au moins en partie par au moins une aube ( 11 ) directrice, les composantes ( 32 ) des ondes électromagnétiques sont reçues par au moins un moyen de réception ( 8 ) et on détermine, à partir d'une répartition spectrale des intensités des ondes ( 32 ) électromagnétiques reçues, la température du revêtement ( 12 ) en surface des aubes (11 ) directrices, **caractérisé en ce que** l'on envoie des ondes ( 31 ) électromagnétiques à des fréquences adaptées à l'épaisseur du revêtement ( 12, 13 ) en surface et leurs composantes réfléchies au moins en partie sur la surface limite du revêtement ( 12, 13 ) en surface et sur la surface limite du revêtement ( 12, 13 ) en surface et du métal des aubes ( 11 ) directrices se trouvant derrière s'éteignent mutuellement au moins en partie.

3. Procédé suivant la revendication 1 et 2, **caractérisé en ce que** l'on détermine à la fois la température du revêtement ( 12 ) en surface des aubes ( 4 ) mobiles et la température du revêtement ( 13 ) en surface des aubes ( 11 ) directrices.

4. Procédé suivant l'une des revendications précédentes, **caractérisé en ce que** les ondes ( 32 ) électromagnétiques reçues ont une décroissance d'intensité à une fréquence ( F1, F2, F3 ) de résonance et la répartition ( S1, S2, S3 ) d'intensité est minimum à la fréquence ( F1, F2, F3 ) de résonance.

5. Procédé suivant la revendication 4, **caractérisé en ce qu'**à partir de la décroissance d'intensité, on détermine la température du revêtement ( 12, 13 ) en surface des aubes ( 4, 11 ).

6. Procédé suivant la revendication 4 ou 5, **caractérisé en ce qu'**à partir de la valeur de la fréquence ( F1, F2, F3 ) de résonance, on détermine la température du revêtement ( 12, 13 ) en surface des aubes ( 4, 11 ).

7. Procédé suivant l'une des revendications précédentes, **caractérisé en ce que** l'on utilise le au moins un moyen ( 8 ) de production des ondes ( 31 ) électromagnétiques pour la réception des ondes pour la réception des ondes ( 32 ) électromagnétiques réfléchies.

8. Procédé suivant l'une des revendications précédentes, **caractérisé en ce que** l'on utilise comme ondes ( 31 ) électromagnétiques des ondes millimétriques, notamment dans le domaine de fréquence de 10 GHz à 130 GHz.

9. Dispositif pour effectuer le procédé suivant l'une des revendications précédentes, comprenant un moyen ( 14 ) de production d'une oscillation électrique, au moins un moyen ( 8 ) de production d'ondes ( 11 ) électromagnétiques ayant des fréquences provenant de l'oscillation adaptées à l'épaisseur du revêtement ( 12, 13 ) en surface, au moins un moyen ( 8 ) de réception d'ondes ( 32 ) électromagnétiques s'éteignant au moins en partie mutuellement et une unité ( 19 ) d'exploitation pour exploiter les ondes ( 32 ) électromagnétiques qui peuvent être reçues.

10. Dispositif suivant la revendication 9, **caractérisé en ce que** le au moins un moyen ( 8 ) de production d'ondes ( 31 ) électromagnétiques est au moins une antenne prévue pour des ondes millimétriques.

11. Dispositif suivant la revendication 10, **caractérisé en ce que** les ondes ( 31 ) électromagnétiques peuvent être envoyées de manière dirigée par la au moins une antenne ( 8 ).

12. Dispositif suivant la revendication 10 ou 11, **caractérisé en ce que** les ondes ( 31 ) électromagnétiques peuvent être envoyées avec possibilité de focalisation par la au moins une antenne ( 8 ).

13. Dispositif suivant l'une des revendications précédentes 9 à 12, **caractérisé en ce que** le au moins un moyen ( 8 ) de production d'ondes ( 31 ) électromagnétiques est propre à la fois à envoyer et à recevoir des ondes ( 31, 32 ) électromagnétiques.

14. Dispositif suivant l'une des revendications 9 à 13, **caractérisé en ce que** le au moins un moyen ( 8 ) de production des ondes ( 31 ) électromagnétiques est disposé dans le canal ( 66 ) d'écoulement de la turbomachine ( 1 ).

15. Dispositif suivant l'une des revendications 9 à 14, **caractérisé par** une turbine à gaz comme turbomachine ( 1 ).
